(19) Europäisches Patentamt
European Patent Office
Office européen des brevets

(11) **EP 2 273 741 A1**

(12) **EUROPEAN PATENT APPLICATION**
published in accordance with Art. 153(4) EPC

(43) Date of publication:
**12.01.2011 Bulletin 2011/02**

(51) Int Cl.:
**H04L 25/02** (2006.01)

(21) Application number: **08873314.2**

(22) Date of filing: **24.11.2008**

(86) International application number:
**PCT/ES2008/000733**

(87) International publication number:
**WO 2009/112601 (17.09.2009 Gazette 2009/38)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **14.03.2008 ES 200800754**

(71) Applicant: **Diaz Fuente, Vicente
28805 Alcala de Henares (Madrid) (ES)**

(72) Inventor: **Diaz Fuente, Vicente
28805 Alcala de Henares (Madrid) (ES)**

(74) Representative: **Barnfather, Karl Jon
Withers & Rogers LLP
Goldings House
2 Hays Lane
London SE1 2HW (GB)**

(54) **IMPROVED ENCODING AND DECODING METHOD FOR THE TRANSMISSION AND ESTIMATION OF MULTIPLE SIMULTANEOUS CHANNELS**

(57) An improved encoding and decoding method for the transmission and estimation of multiple simultaneous channels, thereby solving the problem of shortening the time required to measure the attenuation, absorption or distortion of signals passing through a predetermined medium.

**FIGURE 1**

**Description**

**INVENTION PURPOSE**

The invention referred herein is about an improved coding and decoding method based on the previous patent ("improved coding and decoding method with at least two pairs of orthogonal sequences," requested in Spain as 200603237 on December 21st, 2006). In the former patent, identification or transmission was made over two simultaneous channels using two pairs of complementary sequences.

In the improvement proposed, its use is extended to any number of channels. This method allows estimating a channel with multiple inputs (P) and multiple outputs (Q) - referred as MIMO - for any value of P and Q greater than or equal to 1. In this case, the estimation or transmission of data in the way described herein allows reducing the time of identification of any channel, which results very useful in medical imaging applications, spectrum analysis, electromagnetic analysis, natural resources surveys, data communication or any other application related with the identification of a means or channel.

**BACKGROUND ART**

The state of the art is summarized in the document of PCT 200603237, which is the only one known document that aims at solving the problem in such a way for two channels using two pairs of orthogonal complementary sequences.

Communication systems, spectrum analysis, RADAR, SONAR and other systems of characterization and identification transmit a signal that arrives - reflected or not - to the receiver after passing through a transmission means. This means acts as a linear filter with an impulse response in frequencies H (ω) or temporary h[n]. In order to make the process of retrieving emitted information possible, in most communication systems it is essential to eliminating effects produced by the transmission means in the emitted signal s[n]. This process is known as equalization. The response in frequency can also be used to make a special analysis of the means and, thus, obtaining information of its physical properties.

The channel acts as a filter and distorts the signal. Noise, n[n], due to channel disruptions, thermal noise and other signals interfering with those emitted should be added as well. In conclusion, the signal received, r[n], can be modeled as follows:

$$r[n]=s[n]*h[n]+n[n] \qquad (1)$$

Where * denotes the convolution operation.

By generalizing equation (1) for the case of P inputs and Q outputs, rejecting the term of noise n[n] by clarity, signals r[n] and s[n] are vectors of Q and P length respectively, and h[n] corresponds to a matrix of *PxQ* size, whose elements correspond to vectors of the functions of cross transference among each input and each output of the system.

Thus, the previous expression remains in the time domain as:

$$r[n]=s[n]*h_{P,Q}[n] \qquad (2)$$

Where * is the convolution operator, 0 in the frequency domain as the product

$$R=S \cdot H_{P,Q} \qquad (3)$$

Where channel's transference matrices are:

$$\mathbf{H}_{P,Q} = \begin{pmatrix} H_{1,1} & \cdots & H_{1,Q} \\ \cdots & H_{p,q} & \cdots \\ H_{P,1} & \cdots & H_{P,Q} \end{pmatrix} \qquad \mathbf{h}_{P,Q} = \begin{pmatrix} h_{1,1} & \mathrm{K} & h_{1,Q} \\ \mathrm{M} & \mathrm{O} & \mathrm{M} \\ h_{P,1} & \mathrm{L} & h_{P,Q} \end{pmatrix} \qquad (4)$$

For that, numerous identification methods perform a sequence emission with each of the transmitters separately to identify each coefficient of said transference matrix and thus avoiding mutual interference. Hence, identification time increases with the value of P, Q and the length of the channel to be identified.

The objective of the improvement proposed is to obtain all values of channel coefficients $H_{P,Q}$ or $h_{P,Q[N]}$ as fast as possible using the technology employed in the previous patent for two channels but extending it to multiple simultaneous channels.

Like the previous patent, the fundamental base is the use of complementary sequences properties, whose elements or sequences belonging to orthogonal families meet the following properties:

$$s_{i,j} \otimes s_{i',j'} = \phi_{s_{i,j} s_{i',j'}}[k] = \frac{1}{L} \sum_{n=1}^{L} s_{ij}[n] \cdot s_{i',j'}[n+k]$$

$$SACF[k] = \sum_{j=1}^{M} \phi_{s_{i,j} s_{i,j}}[k] = M \cdot \delta[k] \qquad (5)$$

$$SCCF[k] = \sum_{j=1}^{M} \phi_{s_{i,j} s_{i',j}}[k] = 0 \qquad \forall k$$

Where $\otimes$ is the correlation operator, SACF is the sum of autocorrelation functions of set $\mathbf{S_i}$ and SCCF is the sum of cross-correlations of two sets $\mathbf{S_i}$ and $\mathbf{S_{i'}}$; both sets are uncorrelated and formed by sequences $\mathbf{S_{i,j}}$ corresponding to the sequence j-th of set $\mathbf{S_i}$.

### INVENTION PURPOSE

With the purpose of solving the problem of time referred in previous paragraph, this invention is developed in order to reduce the time necessary to identify the coefficients of the transference matrix.

And that is achieved, according to the new invention, by transmitting simultaneously coded sequences in a specific order, where mutual interferences among them are cancelled, making the identification of coefficients possible in a simultaneous way and, therefore, accelerating the estimation process.

Hence, this new process will allow reducing the time of acquisition in medical imaging systems, spectrum analysis, non-invasive chemical analysis, RADAR, SONAR, natural resources surveys, data communication, and every application requiring attenuation measurement, signal absorption or distortion when passing through a specific means.

### DESCRIPTION OF DRAWINGS

In order to clarify the essence of the invention, two sheets of drawings including three figures are attached herein, where the following is described:

**Fig.**  Schedule of emission and identification structure previously used for two channels, including:

- Two transmitters **T1** and **T2.**
- Two receivers **R1** and **R2.** **1.-**
- Time intervals $\mathbf{T_1}$ and $\mathbf{T_2}$, where correlations are evaluated for obtaining parameters.
- Complementary sequences transmitted by each transmitter in the intervals defined by the process.

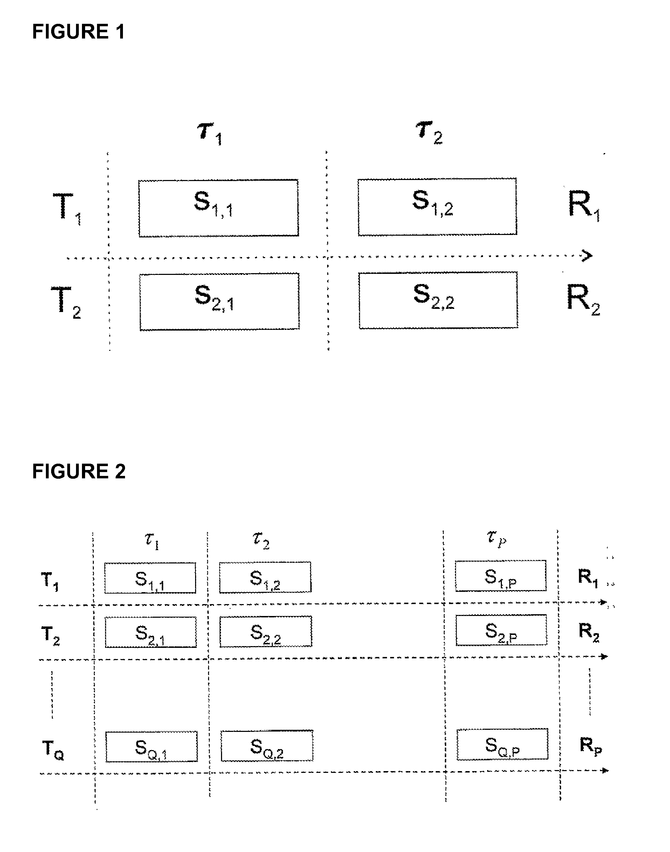

**Fig. 2.-** Schedule of the new emission and identification structure extended to P transmitters and Q receivers, including:

- P transmitters **T1 to TP.**
- Q receivers **R1 to RQ.**
- P time intervals $T_1$ to $T_P$, where correlations are evaluated for obtaining corresponding parameters.
- Complementary sequences transmitted by each transmitter in the intervals defined by the process.

## PREFERRED EMBODIMENT OF INVENTION

The improved coding and decoding method for transmitting and estimating multiple simultaneous channels proclaimed in this invention is characterized by the employment of sets of orthogonal complementary sequences that create a coding preamble comprised of P emitters and perform the following operations described in figure 2:

a) Simultaneous emission of the first sequence of the set of orthogonal sequences assigned to each transmitter by all transmitters.

b) Followed by the emission of the second sequence of the set of orthogonal sequences assigned to each transmitter by all transmitters.

c) Repetition of this process until transmitting P sequences of Q sets of orthogonal sequences assigned to each transmitter.

By applying the properties seen in (5) to signals received according to the preamble described in figure 2 and operating, the identification of transference matrix $h_{p,q}$ parameters in time is performed directly according to this expression:

$$M \cdot h_{p,q} = \sum_{k=1}^{M} r_q^{(k} \otimes s_{p,k}; \quad 1 \le p \le P \quad ; \quad 1 \le q \le Q \quad\quad (6)$$

Where we find that:

**M.-**      Number of complementary sets of M sequences each and that are orthogonal with each other.

$h_{p,q}$.-      Impulse response (in time) between emitter p and receiver q.

$r_q^{(k}$. -    Signal received in receiver q in interval $T_k$.

$S_{p,k}$.-      K-th sequence of set **Sp** inside orthogonal sequence sets among each other.

In that way, the time necessary to estimate *PxQ* coefficients of the transference matrix is reduced by Q due to the simultaneous transmission of Q transmitters.

- And that is possible because when transmitting in this order, mutual interferences of all transmitters and receivers are cancelled making the identification of coefficients possible in a simultaneous way, thus, accelerating the estimation process.
- Moreover, despite the fact it is not the direct objective of this improvement, there is a gain factor M according to expression (6), which allows reducing noise in the identification system proportionally to the number of sequences used.
- On the other hand, filters necessary to perform the process only require additions and subtractions, since the elements of sequences used are values +1 and -1, which correspond to a sign change without products.
- Finally, it can be demonstrated that filters' complexity is proportional to logarithm for base 2 of sequences' length.

Therefore, implementation advantages for the new process would be:

1. Reduction in acquisition time.
2. Increase in signal-noise ratio.
3. There is no need to use products to perform neither correlation nor generating filters.
4. Process complexity is reduced in relation to other procedures.

Despite the fact a specific embodiment of the invention has been described, it should be evident for specialized technicians that this invention can be made in other specific embodiments as long as the following claims are met.

**Claims**

1. Improved coding and decoding method for transmitting and estimating multiple simultaneous channels, mainly **characterized** because the coding preamble employs the sets of complementary orthogonal sequences in the following order:

   • A) Simultaneous emission of the first sequence of the set of orthogonal sequences assigned to each transmitter by all transmitters.
   • B) Emission of the second sequence of the set of orthogonal sequences assigned to each transmitter by all transmitters.
   • Repetition of this process until transmitting P subsequent sequences of Q sets of orthogonal sequences assigned to each transmitter.

2. Improved coding and decoding method for transmitting and estimating multiple simultaneous channels, according to the first claim and **characterized** because the method for obtaining decoding is achieved through the correlation operation with signals received defined as:

$$M \cdot h_{p,q} = \sum_{k=1}^{M} r_q^{(k} \otimes s_{p,k}; \quad 1 \le p \le P \quad ; \quad 1 \le q \le Q \tag{7}$$

Where:

**M.-** Number of complementary sets of M sequences each and that are orthogonal with each other.
$h_{p,q}$**.-** Impulse response (in time) between emitter p and receiver q.
$r_q^{(k}$**.-** Signal received in receiver q in interval $T_k$.
$S_{p,k}$**.-** K-th sequence of set $S_i$ inside orthogonal sequence sets among each other.

FIGURE 1

FIGURE 2

# INTERNATIONAL SEARCH REPORT

| International application No. |
|---|
| PCT/ ES 2008/000733 |

**A. CLASSIFICATION OF SUBJECT MATTER**

*H04L 25/02* (2006.01)

According to International Patent Classification (IPC) or to both national classification and IPC

**B. FIELDS SEARCHED**

Minimum documentation searched (classification system followed by classification symbols)

Documentation searched other than minimum documentation to the extent that such documents are included in the fields searched

Electronic data base consulted during the international search (name of data base and, where practicable, search terms used)

INVENES,EPODOC,WPI

**C. DOCUMENTS CONSIDERED TO BE  RELEVANT**

| Category* | Citation of document, with indication, where appropriate, of the relevant passages | Relevant to  claim No. |
|---|---|---|
| A | WO 2005122513 A1 (DIAZ FUENTE, VICENTE) 22.12.2005, the whole document. | 1,2 |
| A | WO 2005107200 A1 (DIAZ FUENTE, VICENTE) 10.11.2005, the whole document. | 1,2 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 29.April.2009      (29.04.2009) | **(07/05/2009)** |
| Name and mailing address of the ISA/ O.E.P.M. Paseo de la Castellana, 75 28071 Madrid, España. Facsimile No.  34 91 3495304 | Authorized officer M. Alvarez Moreno Telephone No. +34 91 349 54 95 |

Form PCT/ISA/210 (second sheet) (July 2008)

## INTERNATIONAL SEARCH REPORT

Information on patent family members

International application No.

PCT/ ES 2008/000733

| Patent document cited in the search report | Publication date | Patent family member(s) | Publication date |
|---|---|---|---|
| WO 2005122513 A | 22.12.2005 | ES 2255390 A | 16.06.2006 |
| | | CN 1961553 A | 09.05.2007 |
| | | EP 1783976 A | 09.05.2007 |
| | | EP 20050745540 | 29.04.2005 |
| | | JP 2008501264 T | 17.01.2008 |
| | | US 2008112501 A | 15.05.2008 |
| WO 2005107200 A | 10.11.2005 | US 2005245196 A | 03.11.2005 |

Form PCT/ISA/210 (patent family annex) (July 2008)

**EP 2 273 741 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 200603237
- WO 200603237 W